(19) Europäisches Patentamt
European Patent Office
Office européen des brevets

(11) Veröffentlichungsnummer: **0 459 185 A2**

# (12) EUROPÄISCHE PATENTANMELDUNG

(21) Anmeldenummer: **91107421.9**

(51) Int. Cl.$^5$: **C08F 4/642**, C08F 10/00

(22) Anmeldetag: **07.05.91**

(30) Priorität: **12.05.90 DE 4015254**

(43) Veröffentlichungstag der Anmeldung: **04.12.91 Patentblatt 91/49**

(84) Benannte Vertragsstaaten: **AT BE DE DK ES FR GB GR IT LU NL SE**

(71) Anmelder: **HOECHST AKTIENGESELLSCHAFT**
**Postfach 80 03 20**
**W-6230 Frankfurt am Main 80(DE)**

(72) Erfinder: **Dolle, Volker, Dr.**
**Hattersheimer Strasse 15**
**W-6233 Kelkheim/Taunus(DE)**
Erfinder: **Antberg, Martin, Dr.**
**Sachsenring 10**
**W-6238 Hofheim am Taunus(DE)**
Erfinder: **Rohrmann, Jürgen, Dr.**
**Die Ritterwiesen 10**
**W-6237 Liederbach(DE)**
Erfinder: **Winter, Andreas, Dr.**
**Taunusblick 10**
**W-6246 Glashütten(DE)**

## (54) Verfahren zur Herstellung eines Polyolefins.

(57) Olefine der Formel

$R^{11}-CH=CH-R^{12}$

($R^{11}$, $R^{12}$ = H oder $C_1$-$C_{14}$-Alkyl) werden in Gegenwart eines Katalysators bestehend aus mindestens einem Metallocen der Formel I

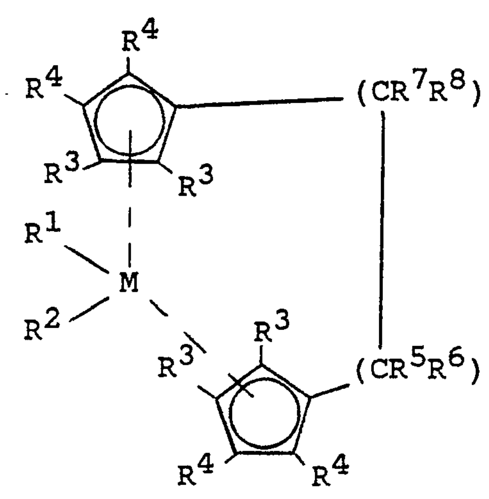

(I)

(M = Zirkon oder Hafnium) und einem Aluminoxan polymerisiert. Man erhält Polymere mit hoher Molmasse in hoher Ausbeute.

EP 0 459 185 A2

Die Erfindung bezieht sich auf ein Verfahren zur Herstellung eines 1-Olefin-Polymers, speziell eines bimodalen Propylenpolymers, mit hoher Isotaktizität und Molmasse und von der Polymerisationstemperatur weitgehend unabhängiger Polydispersität und Molmassenverteilung sowie Molmassenmaximaabstand.

Die Herstellung von isotaktischem PP gelingt mit Hilfe des Ethylen-bis-(4,5,6,7)-tetrahydro-1-indenyl)-zirkondichlorids zusammen mit einem Aluminoxan in einer Suspensionspolymerisation (vgl. US 4769510). Das Polymer besitzt eine enge Molmassenverteilung ($M_w/M_n$ 1,6 bis 2,6).

Durch eine spezielle Voraktivierungsmethode konnte eine beträchtliche Steigerung der Aktivität des Katalysatorsystems erzielt werden (vgl. DE 3 726 067). Die Kornmorphologie des Polymeren wurde ebenfalls durch diese Voraktivierungsmethode verbessert.

Die Molmassen der Polymeren, die nach diesen beiden Anmeldungen erhalten werden, sind für eine technische Anwendung noch zu gering.

Es bestand somit die Aufgabe, ein Verfahren zur Herstellung eines hochmolekularen isotaktischen bimodalen Olefinpolymers zu finden, welches in einem technisch interessanten Temperaturbereich mit großer Katalysatoraktivität durchführbar ist.

Es wurde gefunden, daß die Aufgabe durch Polymerisation von Olefinen in Gegenwart bestimmter Metallocen-Katalysatoren gelöst werden kann.

Die Erfindung betrifft somit ein Verfahren zur Herstellung eines Polyolefins durch Polymerisation eines Olefins der Formel $R^{11}$-CH=CH-$R^{12}$, worin $R^{11}$ und $R^{12}$ gleich oder verschieden sind und ein Wasserstoffatom oder einen $C_1$-$C_{14}$-Alkylrest bedeuten oder $R^{11}$ und $R^{12}$ mit dem sie verbindenden C-Atom einen Ring mit 4 bis 28 C-Atomen bilden, bei einer Temperatur von 0 °C bis 150 °C, bei einem Druck von 0,5 bis 100 bar, in Lösung, in Suspension oder in der Gasphase, in Gegenwart eines Katalysators, welcher aus einem Metallocen und einem Aluminoxan der Formel (II)

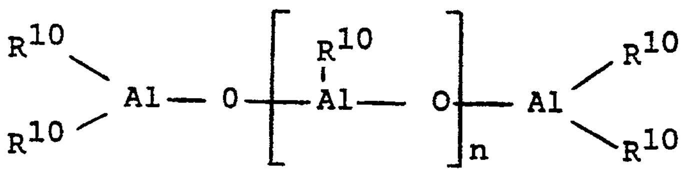

(II)

für den linearen Typ und/oder der Formel (III)

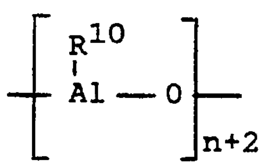

(III)

für den cyclischen Typ besteht, wobei in den Formeln (II) und (III) die Reste $R^{10}$ gleich oder verschieden sind und Wasserstoff, eine $C_1$-$C_6$-Alkylgruppe, Phenyl oder Benzyl bedeuten, und n eine ganze Zahl von 2 bis 50 ist, dadurch gekennzeichnet, daß das Metallocen eine Verbindung der Formel (I)

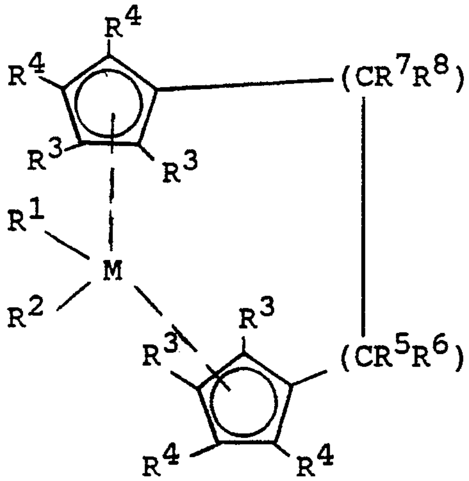

(I)

ist, worin

M Zirkon oder Hafnium ist,

$R^1$ und $R^2$ gleich oder verschieden sind und ein Wasserstoffatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe oder ein Halogenatom bedeuten,

$R^3$ und $R^4$ gleich oder verschieden sind und ein Wasserstoffatom, ein Halogenatom, eine $C_1$-$C_{10}$-Alkylgruppe bedeuten,

oder je zwei benachbarte Reste $R^3$ oder $R^4$ mit den sie verbindenden C-Atomen einen Ring bilden,

$R^5$, $R^6$, $R^7$ und $R^8$ gleich oder verschieden sind und ein Wasserstoffatom, ein Halogenatom, eine $C_1$-$C_{30}$-Alkylguppe, eine $C_1$-$C_{10}$-Fluoralkylgruppe, eine $C_6$-$C_{10}$-Arylgruppe, eine $C_6$-$C_{10}$-Fluorarylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe, eine -$SiMe_3$-Gruppe, eine -0$SiMe_3$-Gruppe, oder eine -$CH_2$-$SiMe_3$-Gruppe bedeuten oder $R^5$ und $R^6$ oder $R^7$ und $R^9$ jeweils mit den sie verbindenden Atomen einen Ring bilden, und die Verbindung der Formel I in Form von mindestens zwei ihrer aus der Metallocen-Herstellung hervorgegangenen Stereoisomeren vorliegt.

Der für das erfindungsgemäße Verfahren zu verwendende Katalysator besteht aus einem Aluminoxan und einem Metallocen der Formel I

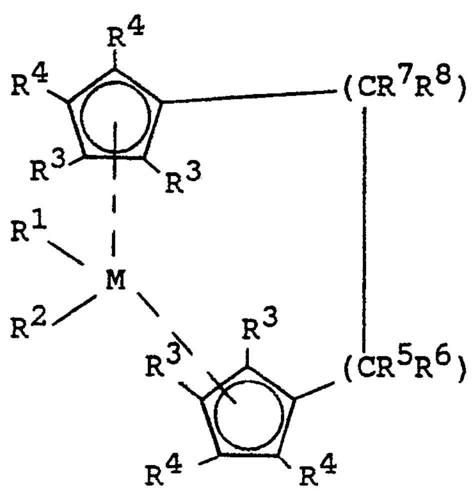

(I)

M ist Hafnium oder Zirkon, bevorzugt Zirkon,

$R^1$ und $R^2$ sind gleich oder verschieden und bedeuten ein Wasserstoffatom, eine $C_1$-$C_{10}$-, vorzugsweise $C_1$-$C_3$-Alkylgruppe, eine $C_1$-$C_{10}$-, vorzugsweise $C_1$-$C_3$-Alkoxygruppe, eine $C_6$-$C_{10}$-, vorzugsweise $C_6$-$C_8$-Aryl-

gruppe, eine $C_6$-$C_{10}$-, vorzugsweise $C_6$-$C_8$-Aryloxygruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_7$-$C_{40}$-, vorzugsweise $C_7$-$C_{12}$-Alkylarylgruppe, eine $C_8$-$C_{40}$-, vorzugsweise $C_8$-$C_{12}$-Arylalkenylgruppe oder ein Halogenatom, vorzugsweise Chlor.

$R_3$ und $R_4$ sind gleich oder verschieden und bedeuten ein Wasserstoffatom, ein Halogenatom, vorzugsweise ein Fluor-, Chlor- oder Bromatom, eine $C_1$-$C_{10}$- vorzugsweise $C_1$-$C_3$-Alkylgruppe, oder je zwei benachbarte Reste $R^3$ oder $R^4$ bilden mit den sie verbindenden C-Atomen einen Ring. Besonders bevorzugte Liganden sind Indenyl, Fluorenyl und Cyclopentadienyl.

$R^5$, $R^6$, $R^7$ und $R^8$ sind gleich oder verschieden und bedeuten ein Wasserstoffatom, ein Halogenatom, eine $C_1$-$C_{30}$-, vorzugsweise $C_1$-$C_4$-Alkylgruppe, insbesondere Methylgruppe oder Ethylgruppe, eine $C_1$-$C_{10}$-Fluoralkylgruppe, vorzugsweise $CF_3$-Gruppe, eine $C_6$-$C_{10}$-Fluorarylgruppe, vorzugsweise Pentafluorphenylgruppe, eine $C_6$-$C_{19}$-, vorzugsweise $C_6$-$C_8$-Arylgruppe, insbesondere $-CH_2-C_6H_5$ und $-C_6H_5$, eine $C_1$-$C_{10}$-, vorzugsweise $C_1$-$C_4$-Alkoxygruppe, insbesondere Methoxygruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_8$-$C_{40}$-, vorzugsweise $C_8$-$C_{12}$-Arylalkenylgruppe, eine $-SiMe_3$-Gruppe, eine $-OSiMe_3$-Gruppe oder eine $-CH_2-SiMe_3$-Gruppe, vorzugsweise $-CH_2-SiMe_3$-Gruppe, oder $R^5$ und $R^6$ oder $R^7$ und $R^8$ bilden jeweils zusammen mit den sie verbindenden Atomen einen Ring. Das Metallocen der Formel I liegt in Form seiner Stereoisomeren vor.

Ganz besonders bevorzugt ist einer der Reste $R^5$, $R^6$, $R^7$ und $R^8$ die Gruppe $-CH_2-SiMe_3$, wobei die anderen drei Reste jeweils ein Wasserstoffatom sind.

Die vorstehend beschriebenen Metallocene können nach folgendem allgemeinen Reaktionsschema hergestellt werden:

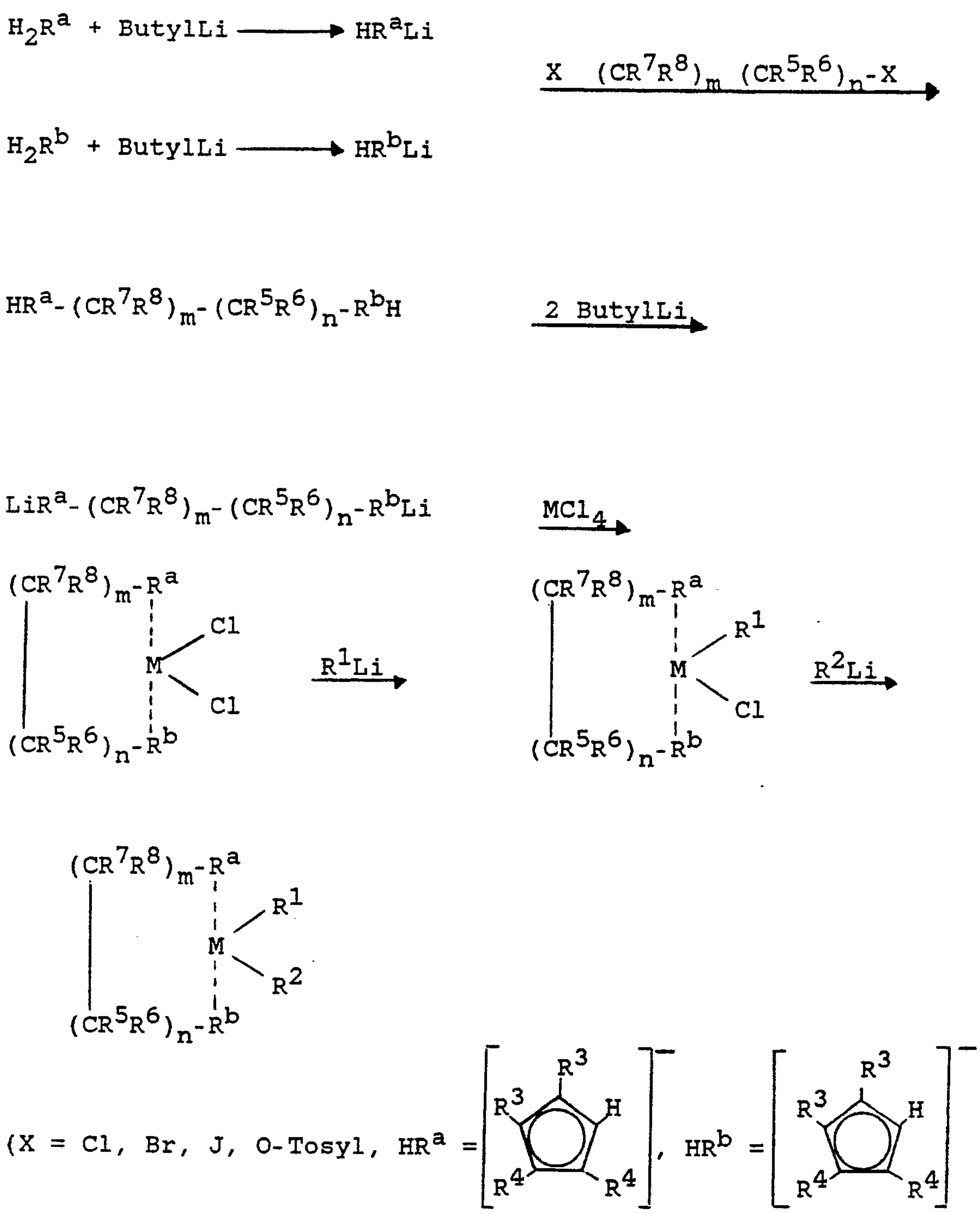


Der Cokatalysator ist ein Aluminoxan der Formel II

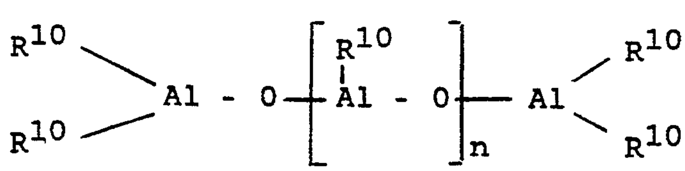 (II)

für den linearen Typ und/oder der Formel (III)

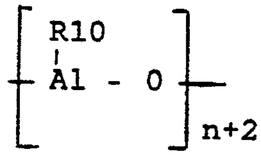 (III)

für den cyclischen Typ. In diesen Formeln bedeuten $R^{10}$ bevorzugt eine $C_1$-$C_6$-Alkylgruppe, vorzugsweise Methyl, Ethyl oder Isobutyl, insbesondere Methyl, und n eine ganze Zahl von 2 bis 50, bevorzugt 5 bis 40. Die exakte Struktur des Aluminoxans ist jedoch nicht bekannt.

Das Aluminoxan kann auf verschiedene Art und Weise hergestellt werden. Nachfolgend werden insbesondere Beispiele für die Herstellung von Aluminoxanen mit $R^{10}$ = Alkyl beschrieben. Verbindungen mit $R^{10}$ ≠ Alkyl lassen sich aus entsprechenden Ausgangsverbindungen analog herstellen.

Eine Möglichkeit ist die vorsichtige Zugabe von Wasser zu einer verdünnten Lösung eines Aluminiumtrialkyls, indem die Lösung des Aluminiumtrialkyls, vorzugsweise Aluminiumtrimethyl, und das Wasser jeweils in kleinen Portionen in eine vorgelegte größere Menge eines inerten Lösemittels eingetragen werden und zwischendurch das Ende der Gasentwicklung jeweils abgewartet wird.

Bei einem anderen Verfahren wird fein gepulvertes Kupfersulfatpentahydrat in Toluol aufgeschlämmt und in einem Glaskolben unter Inertgas bei etwa -20 °C mit soviel Aluminiumtrialkyl versetzt, daß für je 4 Al-Atome etwa 1 mol $CuSO_4 \cdot 5H_2O$ zur Verfügung steht. Nach langsamer Hydrolyse unter Alkan-Abspaltung wird die Reaktionsmischung 24 bis 48 Stunden bei Zimmertemperatur belassen, wobei gegebenenfalls gekühlt werden muß, damit die Temperatur nicht über 30 °C ansteigt. Anschließend wird das im Toluol gelöste Aluminoxan von dem Kupfersulfat abfiltriert und die Lösung im Vakuum eingeengt. Es wird angenommen, daß bei diesem Herstellungsverfahren die niedermolekularen Aluminoxane unter Abspaltung von Aluminiumtrialkyl zu höheren Oligomeren kondensieren.

Weiterhin erhält man Aluminoxane, wenn man bei einer Temperatur von -20 bis 100 °C in einem inerten aliphatischen oder aromatischen Lösemittel, vorzugsweise Heptan oder Toluol, gelöstes Aluminiumtrialkyl, vorzugsweise Aluminiumtrimethyl, mit kristallwasserhaltigen Aluminiumsalzen, vorzugsweise Aluminiumsulfat, zur Reaktion bringt. Dabei beträgt das Volumenverhältnis zwischen Lösemittel und dem verwendeten Aluminiumalkyl 1:1 bis 50:1 -vorzugsweise 5:1 - und die Reaktionszeit, die durch Abspaltung des Alkans kontrolliert werden kann, 1 bis 200 Stunden - vorzugsweise 10 bis 40 Stunden.

Von den kristallwasserhaltigen Aluminiumsalzen werden insbesondere jene verwendet, die einen hohen Gehalt an Kristallwasser aufweisen. Besonders bevorzugt ist Aluminiumsulfat-Hydrat, vor allem die Verbindungen $Al_2(SO_4)_3 \cdot 16H_2O$ und $Al_2(SO_4)_3 \cdot 18H_2O$ mit dem besonders hohen Kristallwassergehalt von 16 bzw. 18 mol $H_2O$/mol $Al_2(SO_4)_3$.

Eine weitere Variante zur Herstellung von Aluminoxanen besteht darin, Aluminiumtrialkyl, vorzugsweise Aluminiumtrimethyl, in dem im Polymerisationskessel vorgelegten Suspensionsmittel, vorzugsweise im flüssigen Monomeren, in Heptan oder Toluol, zu lösen und dann die Aluminiumverbindung mit Wasser umzusetzen.

Neben den zuvor geschilderten Verfahren zur Herstellung von Aluminoxanen gibt es weitere, welche brauchbar sind.

Unabhängig von der Art der Herstellung ist allen Aluminoxanlösungen ein wechselnder Gehalt an nicht umgesetztem Aluminiumtrialkyl, das in freier Form oder als Addukt vorliegt, gemeinsam.

Es ist möglich, das Metallocen vor dem Einsatz in der Polymerisationsreaktion mit einem Aluminoxan der Formel (II) und/oder (III) vorzuaktivieren. Dadurch wird die Polymerisationsaktivität deutlich erhöht und die Kornmorphologie verbessert.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff.
Bevorzugt wird Toluol verwendet.
Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von $10^{-4}$ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78 °C bis 100 °C, vorzugsweise 0 bis 70 °C.

Die Polymerisation wird in bekannter Weise in Lösung, in Suspension oder in der Gasphase, kontinuierlich oder diskontinuierlich, ein- oder mehrstufig bei einer Temperatur von 0 bis 150 °C, vorzugsweise 30 bis 80 °C, durchgeführt. Polymerisiert werden Olefine der Formel $R^{11}$-CH=CH-$R^{12}$. In dieser Formel sind $R^{11}$ und $R^{12}$ gleich oder verschieden und bedeuten ein Wasserstoffatom oder einen Alkylrest mit 1 bis 28 C-Atomen. $R^{11}$ und $R^{12}$ können jedoch auch mit den sie verbindenden C-Atomen einen Ring mit 4 bis 28 C-Atomen bilden. Beispiele für solche Olefine sind Ethylen, Propylen, 1-Buten, 1-Hexen, 4-Methyl-1-penten, 1-Octen, Norbornen oder Norbornadien. Insbesondere wird Propylen polymerisiert.

Als Molmassenregler wird, falls erforderlich, Wasserstoff zugegeben. Der Gesamtdruck im Polymerisationssystem beträgt 0,5 bis 100 bar. Bevorzugt ist die Polymerisation in dem technisch besonders interessanten Druckbereich von 5 bis 64 bar.

Dabei wird das Metallocen in einer Konzentration, bezogen auf das Übergangsmetall, von $10^{-3}$ bis $10^{-7}$, vorzugsweise $10^{-4}$ bis $10^{-6}$ mol Übergangsmetall pro $dm^3$ Lösemittel bzw. pro $dm^3$ Reaktorvolumen angewendet. Das Aluminoxan wird in einer Konzentration von $10^{-5}$ bis $10^{-1}$ mol, vorzugsweise $10^{-4}$ bis $10^{-2}$ mol pro $dm^3$ Lösemittel bzw. pro $dm^3$ Reaktorvolumen verwendet. Prinzipiell sind aber auch höhere Konzentrationen möglich.

Als Metallocen wird eine Verbindung der Formel I eingesetzt, die in Form von mindestens zwei ihrer aus der Metallocen-Herstellung hervorgegangenen Stereoisomeren vorliegt.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Butan, Pentan, Hexan, Heptan, Isooctan, Cyclohexan, Methylcyclohexan genannt.

Weiterhin kann eine Benzin- bzw. hydrierte Dieselölfraktion benutzt werden. Brauchbar ist auch Toluol. Bevorzugt wird im flüssigen Monomeren polymerisiert.

Werden inerte Lösemittel verwendet, werden die Monomeren gasförmig oder flüssig zudosiert.

Die Dauer der Polymerisation ist beliebig, da das erfindungsgemäß zu verwendende Katalysatorsystem einen nur geringen zeitabhängigen Abfall der Polymerisationsaktivität zeigt.

Das erfindungsgemäße Verfahren zeichnet sich dadurch aus, daß die verwendeten Metallocene sehr temperaturstabil sind, so daß sie mit hoher Aktivität auch bei Temperaturen bis 90 °C eingesetzt werden können. Außerdem können die als Cokatalysatoren dienenden Aluminoxane in geringeren Konzentrationen als bisher zugesetzt werden.

Das erfindungsgemäß zu verwendende Metallocengemisch hat gegenüber dem Stand der Technik den Vorteil, zusammen in einem Synthesegang zu entstehen, was Zeit und Platz sowie Geräte und Lösemittel spart. Es enthält Verbindungen, welche 1-Olefine, besonders Propylen, zu Polymeren mit einer Molmasse $M_w$ von mehr als 70 000 g/mol polymerisieren können. Dies wird durch die Molmassenverteilung, die ein hohes $M_w/M_n$-Verhältnis (> 2) aufweist, bestätigt. Die Molmassenverteilung ist bimodal.

**Beispiel 1**

[($\eta^5$-1-Indenyl-$CH_2$*CH($CH_2SiMe_3$)-($\eta^5$-1-indenyl)]$ZrCl_2$

Zu 12,2 g (42,6 mmol) des Liganden (Diastereomerengemisch) in 50 $cm^3$ THF wurden bei Raumtemperatur 14 $cm^3$ einer 1,6 n (22,4 mmol) Butyllithium-Hexanlösung innerhalb von 1 h zugetropft und der Ansatz bei 60 °C bis 0,5 h nach Beendigung der Butanentwicklung gerührt.

Die erhaltene Dilithiosalzlösung wurde simultan mit einer Lösung von 4,21 g (11,16 mmol) $ZrCl_4(thf)_2$ in 80 $cm^3$ THF bei Umgebungstemperatur zu 30 $cm^3$ THF innerhalb von 1 h zugetropft. Der Ansatz wurde dann 8 h bei Raumtemperatur gerührt. Der Ansatz wurde eingeengt. Die beim Einengen anfangs abgeschiedenen Salze wurden abfiltriert und der Ansatz letztendlich zur Trockne eingedampft. Der Rückstand wurde in n-Pentan suspendiert und abgetrennt. Darauf wurde der feste Stoff in Ether aufgenommen, das Etherlösliche wurde abfiltriert und der Ether abgezogen. Es verblieben 38 g (5,94 mmol - 53 %) eines gelben Pulvers. Sein NMR-Spektrum zeigte das Vorliegen eines Komplexgemisches von mindestens drei Verbindungen. Die Elementaranalyse zeigte folgendes Ergebnis:
C 55,8 (bar. 57,12), H 5,4 (ber. 5,19), und
Cl 14,1 (ber. 14,05), alles in %.

**Beispiele 2 bis 5**

Ein trockener 16 $dm^3$-Kessel wurde mit Stickstoff gespült und mit 10 $dm^3$ flüssigem Propylen befüllt. Dann wurden zwei Drittel der in der Tabelle für den jeweiligen Versuch angegebenen Methylaluminoxan-(MAO) Menge als toluolische Lösung zugegeben und der Ansatz bei 30 °C 15 Minuten gerührt.

Parallel dazu wurde eine Lösung des Metallocens in einem Drittel der in der Tabelle angegebenen MAO-Menge hergestellt und durch 15 minütiges Stehenlassen voraktiviert.

Diese Lösung wurde dann in den Kessel gegeben. Das Polymerisationssystem wurde auf die entsprechende Polymerisationstemperatur gebracht und die Polymerisation gestartet. Die Polymerisation wurde nach 60 Minuten durch Abkühlen des Reaktors und Entspannen gestoppt. Die erhaltene Polymerausbeute und die ermittelten analytischen Daten sind der Tabelle zu entnehmen.

In den Tabellen sind die folgenden Abkürzungen verwendet worden:

VZ = Viskositätszahl in $cm^3/g$,
$M_w$ = Molmassengewichtsmittel in g/mol
$M_w/M_n$ = Polydispersität, ermittelt durch Gelpermeationschromatographie (GPC)

Polymerisationsversuche mit $[(IND)-CH^{*}CH_2SiMe_3-CH_2-(IND)]ZrCl_2$

| Temperatur [°C] | Kontakt-menge [mg] | Kontakt-molmasse [g/mol] | Aktivator-menge [$cm^3$] | MAO [%] | MAO [mmol] | Ausbeute [kg] | Aktivität [kg PP/g Kontakt/h] | Schüttgew. [$g/dm^3$] | VZ [$cm^3/g$] | $M_w$ [g/mol] | $M_w/M_n$ |
|---|---|---|---|---|---|---|---|---|---|---|---|
| 40 | 19,9 | 504,5 | 40,2 | 10,0 | 60 | 0,140 | 7,0 | 101 | 89 | 70700 | 7,3 |
| 50 | 13,9 | 504,5 | 40,2 | 10,0 | 60 | 0,880 | 63,1 | 183 | 81 | 59300 | 8,5 |
| 60 | 19,8 | 504,5 | 40,2 | 10,0 | 60 | 1,280 | 129,1 | 264 | 77 | 58200 | 5,9 |
| 70 | 6,0 | 504,5 | 40,2 | 10,0 | 60 | 1,040 | 172,2 | 246 | 55 | 43300 | 6,9 |

**Patentansprüche**

1. Verfahren zur Herstellung eines Polyolefins durch Polymerisation eines Olefins der Formel $R^{11}-CH=CH-R^{12}$, worin $R^{11}$ und $R^{12}$ gleich oder verschieden sind und ein Wasserstoffatom oder einen $C_1$-$C_{14}$-Alkylrest bedeuten oder $R^{11}$ und $R^{12}$ mit dem sie verbindenden C-Atom einen Ring mit 4 bis 28 C-Atomen bilden, bei einer Temperatur von 0 °C bis 150 °C, bei einem Druck von 0,5 bis 100 bar, in Lösung, in Suspension oder in der Gasphase, in Gegenwart eines Katalysators, welcher aus einem Metallocen und einem Aluminoxan der Formel (II)

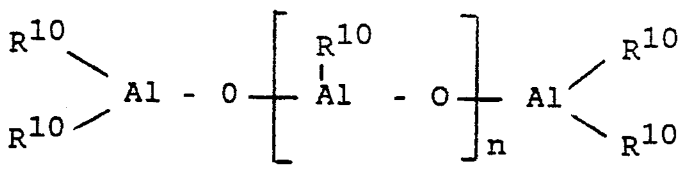

(II)

für den linearen Typ und/oder der Formel (III)

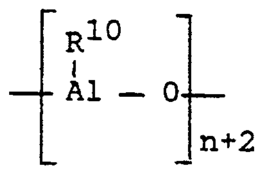

(III)

für den cyclischen Typ besteht, wobei in den Formeln (II) und (III) die Reste $R^{10}$ gleich oder verschieden sind und Wasserstoff, eine $C_1$-$C_6$-Alkylgruppe, Phenyl oder Benzyl bedeuten, und n eine ganze Zahl von 2 bis 50 ist, dadurch gekennzeichnet, daß das Metallocen eine Verbindung der Formel (I)

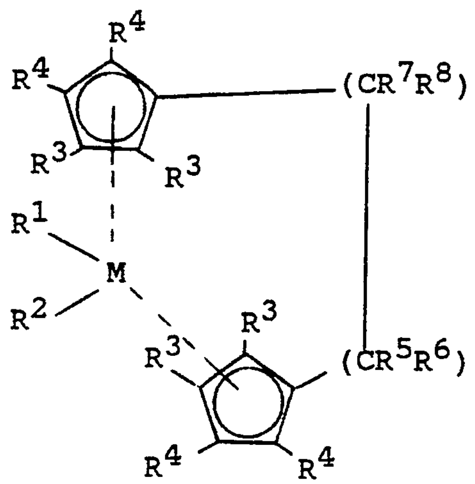

(I)

ist, worin

M Zirkon oder Hafnium ist,

$R^1$ und $R^2$ gleich oder verschieden sind und ein Wasserstoffatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine C8-C40-Arylalkenylgruppe oder ein Halogenatom bedeuten,

$R^3$ und $R^4$ gleich oder verschieden sind und ein Wasserstoffatom, ein Halogenatom oder eine $C_1$-$C_{10}$-Alkylgruppe bedeuten,

oder je zwei benachbarte Reste $R^3$ oder $R^4$ mit den sie verbindenden C-Atomen einen Ring bilden,

$R^5$, $R^6$, $R^7$ und $R^8$ gleich oder verschieden sind und ein Wasserstoffatom, ein Halogenatom, eine $C_1$-$C_{30}$-Alkylguppe, eine $C_1$-$C_{10}$-Fluoralkylgruppe, eine $C_6$-$C_{10}$-Arylgruppe, eine $C_6$-$C_{10}$-Fluorarylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe, eine -$SiMe_3$-Gruppe, eine -0$SiMe_3$-Gruppe, oder eine -$CH_2$-$SiMe_3$-Gruppe bedeuten

oder $R^5$ und $R^6$ oder $R^7$ und $R^8$ jeweils mit den sie verbindenden Atomen einen Ring bilden, und die Verbindung der Formel I in Form von mindestens zwei ihrer aus der Metallocen-Herstellung hervorgegangenen Stereoisomeren vorliegt.

**2.** Verfahren nach Anspruch 1, dadurch gekennzeichnet, daß Propylen polymerisiert wird.

**3.** Polypropylen mit einer Molmasse größer 70 000 g/mol, hergestellt nach dem Verfahren nach Aspruch 1.